# EUROPEAN PATENT APPLICATION

(11) **EP 2 059 024 A2**
(43) Date of publication of application: **13.05.2009**
(21) Application number: 08253518.8
(22) Date of filing: 29.10.2008
(51) Int. Cl.: H04N 5/232

(54) **Image processing device, image processing method, and computer program product**

(30) Priority: 29.10.2007 JP 2007279928
(71) Applicant: Ricoh Company, Ltd., Tokyo 143-8555 (JP)
(72) Inventor: Guan, Haike, Tokyo 143-8555 (JP)
(74) Representative: Mounteney, Simon James

(57) **Abstract**

In an image capturing device, an image acquiring unit (101) acquires image data captured for a subject, a distance information acquiring unit (108) acquires a distance from the subject included within each region to a capturing position for the image data for each of a plurality of regions constituting the acquired image data, a distinguishing information acquiring unit (113) acquires distinguishing information for distinguishing the subject from the image data, and a generating unit (102, 112, 103) generates object regions the subject within the image data is divided up into each processing target from the image data based on the shooting distances and the distinguishing information.

## Description

### BACKGROUND OF THE INVENTION

### 1. Field of the Invention

The present invention relates to a technology for extracting regions from image information.

### 2. Description of the Related Art

The number of users of digital still cameras has increased as the technology for digital still cameras has developed.

Small image-sensing elements are used in image capturing devices referred to as so-called compact digital cameras. The focal length of an image capture optical system is therefore also short. Assuming that an F-number for the image capture optical system is not changed, the depth of field deepens when the focal length is made short.

Assuming that a compact digital camera and a single lens reflex camera are set with the same F-value, then an image with little blurring can be obtained with the compact digital camera because the focal point can be focused within a relatively broad focal range compared to the single lens reflex camera. There are cases where this is effective with scenic images etc. However, when taking photographs of images where blurring of the background is required, such as with a portrait, clarity extends as far as the background and this is detrimental to the power of expression.

Japanese Patent Application Laid-open No. 2005-39680 discloses a technology that can obscure the background of images taken using a camera where the depth of field is deep. In this technology, two images are photographed at different focal positions, and focused regions and blurred regions are then cut out from the images and the cut regions are combined into one image.

The technology disclosed in Japanese Patent Application Laid-open No. 2005-39680 is technology where the level of blurring is made stronger as one goes away from the focused region. The background in around the subject is therefore hardly blurred at all. In the case of, for example, photographing a person, the background around the person is not blurred at all. The power of expression therefore cannot be said to be improved. The technology disclosed in Japanese Patent Application Laid-open No. 2005-39680 experiences this problem because the regions that are to be blurred and the regions that are not to be blurred are not distinguished. The question now is how to distinguish regions that are to be blurred and regions that are not to be blurred.

Technology also exists where regions within an image information where substantially the same color continues in a smooth manner are determined to be regions denoting the same object from among various objects present within the image information. On the contrary, portions where the color changes abruptly are determined to be boundary portion with other objects. Whether the same color continues in a smooth manner, or whether the color changes abruptly, is determined based on colors and edges in the image information. Such technology is disclosed in Comaniciu, D.; Meer, P., "Robust analysis of feature spaces: color image segmentation", Computer Vision and Pattern Recognition, 1997.Proceedings., 1997 IEEE Computer Society Conference on Volume, Issue, 17-19 June 1997, Page(s):750-755. It is therefore possible to identify regions for respective objects.

However, the technology disclosed in "Robust analysis of feature spaces: color image segmentation" has problems recognizing cases where different colors are contained in the same object as discrete regions. For example, when the subject is a person, a person's hair is identified as being a separate region to a facial portion.

### SUMMARY OF THE INVENTION

It is an object of the present invention to at least partially solve the problems in the conventional technology.

According to an aspect of the present invention, there is provided an image processing device including an image acquiring unit that acquires image information captured for a subject; a distance information acquiring unit that acquires a distance from the subject included within each region to a capturing position for the image information for each of a plurality of regions constituting the image information; a distinguishing information acquiring unit that acquires distinguishing information for distinguishing the subject from the image information; and a generating unit that generates object regions the subject within the image information is divided up into each processing target from the image information based on the distance and the distinguishing information.

According to another aspect of the present invention, there is provided an image processing method including first acquiring including acquiring image information captured for a subject; second acquiring including acquiring a distance from the subject included within each region to a capturing position for the image information for each of a plurality of regions constituting the image information; third acquiring including acquiring distinguishing information for distinguishing the subject from the image information; and generating object regions the subject within the image information is divided up into each processing target from the image information based on the distance and the distinguishing information.

According to still another aspect of the present invention, there is provided a computer program product including a computer program stored on a computer-readable recording medium which when executed on a computer causes the computer to execute the above method.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of an image processor of an image capturing device according to a first embodiment of the present invention;
Fig. 2 is a diagram showing a table structure for a blurring function DB;
Fig. 3 is an explanatory diagram showing small regions separated by the image region dividing unit;
Fig. 4 is a view showing an example of a reduced image divided into blocks;
Fig. 5 is a diagram showing an example of objects extracted from within the image data;
Fig. 6 is a diagram showing an example of image data subjected to different blurring processing every object;
Fig. 7 is a flowchart showing a procedure for carrying out blurring processing on image data up to outputting the resultant data performed by the image capturing device of the first embodiment;
Fig. 8 is a detailed flowchart of the processing performed at Step S701 of Fig. 7;
Fig. 9 is a detailed flowchart of the processing performed at Step S706 of Fig. 7;
Fig. 10 is a block diagram showing hardware for a digital camera of the first embodiment;
Fig. 11 is a block diagram showing a digital still camera and an image processing device of a second embodiment of the present invention;
Fig. 12 is a flowchart showing a procedure for processing carrying out blurring processing on image data up to outputting the resultant data performed by the image processing device of the second embodiment; and
Fig. 13 is a block diagram showing hardware for the image processing device of the second embodiment.

### DETAILED DESCRIPTION OF THE PREFERRED EMBODIMENTS

Exemplary embodiments of the present invention are explained in detail with reference to the accompanying drawings. The exemplary embodiments shown below illustrate an example of applying an image processing device to an image capturing device.

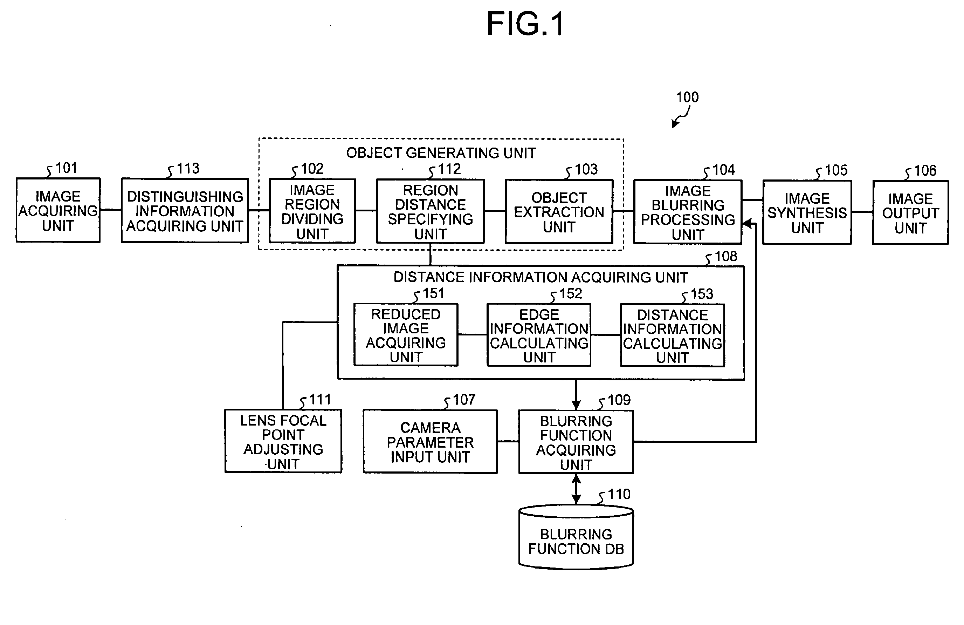

Fig. 1 is a block diagram showing an image processor of an image capturing device 100 according to a first embodiment. The image capturing device 100 includes an image acquiring unit 101, an image region dividing unit 102, an object extraction unit 103, an image blurring processing unit 104, an image synthesis unit 105, an image output unit 106, a camera parameter input unit 107, a distance information acquiring unit 108, a blurring function acquiring unit 109, a blurring function database (DB) 110, a lens focal point adjusting unit 111, a region distance specifying unit 112, and a distinguishing information acquiring unit 113. The image capturing device 100 carries out blurring processing on input image data and outputs the resultant data.

At the image capturing device 100, blurring processing is carried out on a region having a deep depth of field in one picture thereby generating image data with blurred background. The level of the blurring can be adjusted according to the shooting distance.

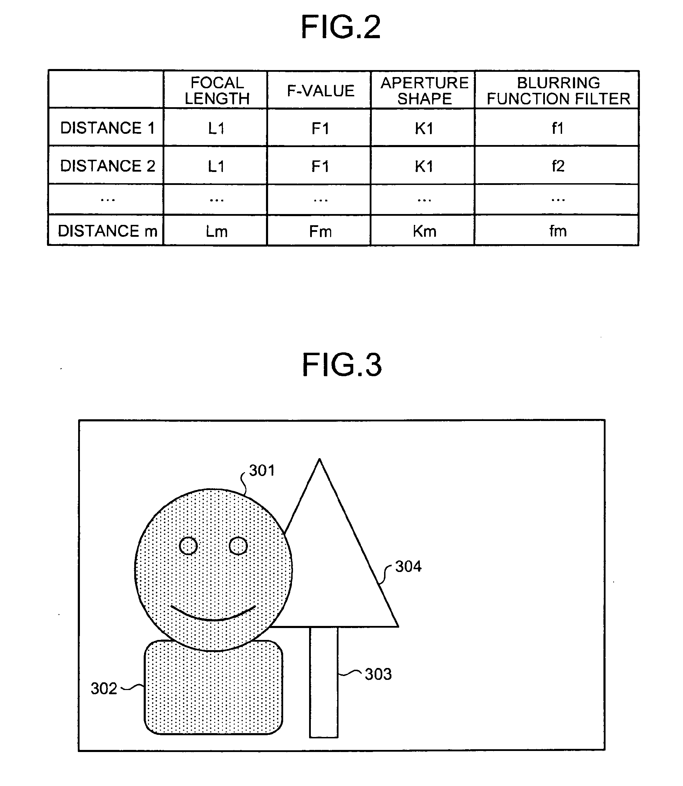

The blurring function DB 110 stores therein functions for the blurring processing. Fig. 2 is a table showing a table structure for the blurring function DB 110. The blurring function DB 110 stores therein a distance difference, a focal length, an F-value, an aperture shape, and a blurring function filter in a correlated manner. A shooting distance means a difference in shooting distances between a main subject and a desired subject. The focal length, the F-value, and the shape of the aperture can be set to desired values at the image capturing device 100. The focal length, the F-value, and the shape of the aperture can be set virtually rather than setting those parameters actually.

A blurring function filter f used in the blurring processing is taken to be an N×N filter. The value for each element is appropriately set in advance according to camera parameters, shooting distance, and an assumed camera lens and shutter speed etc. In this way, it is possible to produce the same background blurring as for a single lens reflex camera.

The blurring function DB 110 is a data set for blurring functions calculated from design values for camera parameters such as, for example, a focal length, an aperture size, a difference in shooting distance to main subject, and an eye shape. The difference in shooting distance means a difference between a shooting distance to a subject or background that is the target of blurring processing and a shooting distance to the main subject. In this manner, at the image capturing device 100, an appropriate blurring function filter can be set based on parameters used at the camera and the difference in shooting distances. The main subject is the subject being focused on and is taken to be the subject that is not made the target of blurring processing.

The image acquiring unit 101 acquires image data captured for the subject by the image capturing device 100. The image data is taken to be image data of a deep depth of field.

The distinguishing information acquiring unit 113 acquires distinguishing information for distinguishing the subject in the image data from the image data. The distinguishing information acquiring unit 113 acquires, although not limited to, colors and/or edges of the subject as the distinguishing information.

The image region dividing unit 102 divides the image data into smaller regions that can be determined to be for the same subject based on the distinguishing information. It is possible to use the method of "Computer Vision and Pattern Recognition, 1997, Proceedings", 1997 IEEE Computer Society Conference on Volume, 17-19 June, 1997, 750-755 to divide the image data.

The image region dividing unit 102 first filters the image data using a low-pass filter thereby smoothing the edges and colors in the image data. The image region dividing unit 102 then identifies regions in the filtered image data having different color and contrast. The image region dividing unit 102 finally divides every region identified within the filtered image data and every smaller region corresponding to the image data before filtering.

Fig. 3 is a view illustrating small regions divided by the image region dividing unit 102 in the image data. In the example shown in Fig. 3, the image region dividing unit 102 divided the image data into a small region 301, a small region 302, a small region 303, a small region 304, and a background.

The lens focal point adjusting unit 111 adjusts the focus of a lens of the image capturing device 100.

The distance information acquiring unit 108 includes a reduced image acquiring unit 151, an edge information calculating unit 152, and a distance information calculating unit 153. A shooting distance for the image capturing device 100 and the subject is then acquired every block of a predetermined size for the image capturing device 100 and the image data. The distance information acquiring unit 108 also acquires a difference in shooting distances between the main subject and another subject. The distance information acquiring unit 108 specifies the block being focused on.

The reduced image acquiring unit 151 captures images using the image capturing device 100 in accordance with adjustment of the focal point of the lens by the lens focal point adjusting unit 111 and acquires reduced images every different focal point. It is also possible to improve processing speed by acquiring reduced images.

Regarding a plurality of reduced images for different acquired focal points, the edge information calculating unit 152 separates each reduced image every block and calculates a total value for contrast values for within each block. The edge information calculating unit 152 compares contrast values for the same position for a plurality of reduced images. The reduced image with the highest contrast value is then specified and it is determined whether or not the focal point is in focus at the block where the reduced image is specified.

The edge information calculating unit 152 specifies a block for which the contrast value is the highest as the block being focused on.

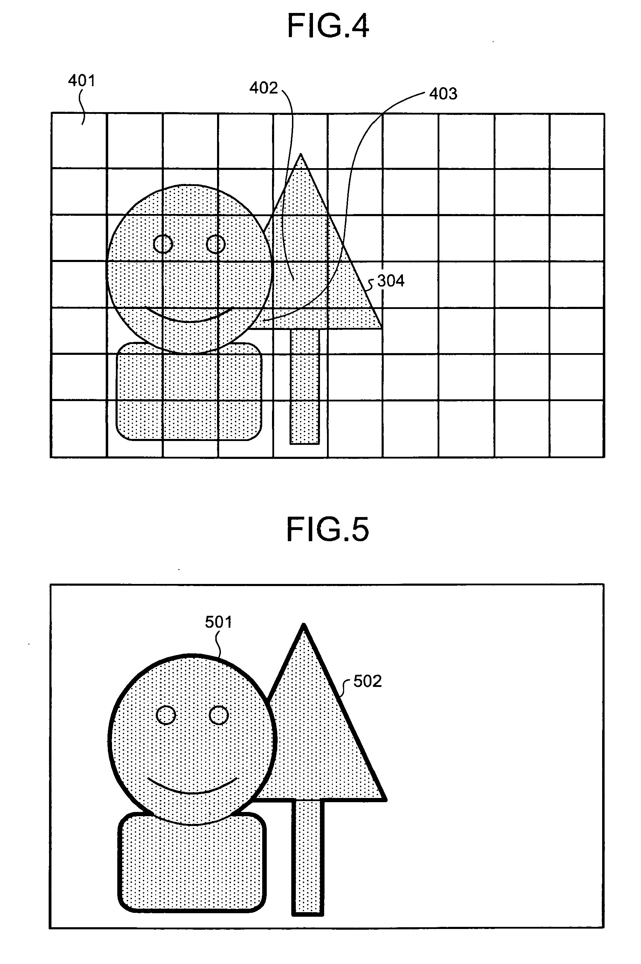

Fig. 4 is a view showing an example of a reduced image divided into blocks. As shown in Fig. 4, it is possible to calculate the shooting distance for the blocks respectively divided up every prescribed size.

Returning to Fig. 1, the distance information calculating unit 153 calculates the shooting distance each block from the focal position of the reduced image specified as having the highest contrast value for each block. This shooting distance can be calculated from the position of the lens when the image capturing element of the image capturing device 100 and the focal point are in focus and the positional relationship of the photographing element and the subject.

The distance information calculating unit 153 also calculates the difference in the shooting distance with the block being focused on every block.

In this embodiment, the shooting distance to the subject is calculated using a method of detecting contrast. However, the method of calculating the shooting distance is not limited. For example, it is also possible to calculate the shooting distance to the subject by shining auxiliary light.

The region distance specifying unit 112 specifies a shooting distance acquired from a block including a small region as a shooting distance from a subject photographed in the small region to the capturing position every small region divided by the image region dividing unit 102.

When the small region is included in a plurality of blocks, the region distance specifying unit 112 specifies a shooting distance up to the subject photographed in the small region using a shooting distance acquired from the block where the surface area occupied by the small region is the largest.

In the example shown in Fig. 4, while deciding the distance of the small region 304, a block 402 for which the surface area of the small region 304 is the largest is utilized rather than a block 403. It is therefore possible to specify the shooting distance with a high degree of precision every small region.

The object extraction unit 103 combines small regions divided by the image region dividing unit 102 and extracts objects having meaning. An "object" is a subject photographed in the image data and refers to a person, object, foreground, or background.

The object extraction unit 103 combines the small regions based on shooting distances specified by the region distance specifying unit 112 every small region. The object extraction unit 103 of this embodiment generates objects by combining small regions where the shooting distances specified by the region distance specifying unit 112 are close. It is also possible to determine whether a shooting distance is within a predetermined threshold value to determine whether the shooting distance is close.

The image region dividing unit 102, the region distance specifying unit 112, and the object extraction unit 103 are necessary for generating objects. In other words, the structure that is a combination of these structures is an object generating unit.

Fig. 5 is a diagram showing an example of an object extracted from within the image data. The shooting distance between the small region 301 and the small region 302 shown in Fig. 3 is small. The small regions are therefore linked and an object 501 shown in Fig. 5 is extracted. The shooting distance for the small region 303 and the small region 304 is also small. These small regions are therefore linked and extracted as an object 502. The image data therefore includes the object 501, the object 502, and a background. The shooting distance is also taken to be specified for the background (for example, infinity, etc.).

Returning to Fig. 1, the camera parameter input unit 107 inputs a virtual camera focal length, an F-value, and an aperture shape. This virtual camera is the same as a single lens reflex camera. The actual focal length, F-value, and aperture shape of the image capturing device 100 can also be inputted.

The blurring function acquiring unit 109 acquires a blurring function taking the focal length, the F-value, and the aperture shape inputted by the camera parameter input unit 107 and the shooting distance difference acquired by the distance information acquiring unit 108 as search keys. The focal length, the F-value, and the aperture shape are used as search keys. The blurring function acquiring unit 109 acquires a blurring function from the blurring function DB 110 using the search keys. An acquired blurring function is then outputted to the image blurring processing unit 104.

The image blurring processing unit 104 carries out blurring processing using a blurring function acquired by the blurring function acquiring unit 109 every object extracted by the object extraction unit 103. The blurring processing uses a blurring function that differs according to the difference in shooting distance to the main subject, every object. The image blurring processing unit 104 notifies the position of the block being focused on from the blurring function acquiring unit 109 via the region distance specifying unit 112.

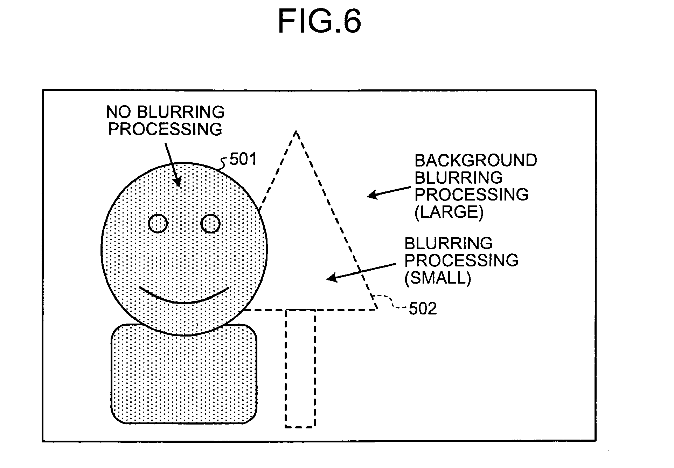

Fig. 6 is a diagram showing an example of image data subjected to different blurring processing every object. When the focal point is focused on the object 501 as shown in Fig. 6 (including the block determined to be focused on), this is determined to be the main subject and blurring processing is not carried out. Objects that are further away from the object 501 and the background etc. are subjected to strong blurring processing. The image blurring processing unit 104 subjects the object 502 to blurring processing using a blurring function where the blurring is weak. The blurring function acquires appropriate items from the difference in shooting distance with the main subject. The image blurring processing unit 104 therefore carries out blurring processing on the background using a blurring function for strong blurring.

After blurring processing is carried out by the image blurring processing unit 104, the image synthesis unit 105 synthesizes the object and the background and generates image data. The image output unit 106 then outputs the generated image data to a display unit (not shown) that the image capturing device 100 is provided with and to other apparatus connected to the image capturing device 100.

It is therefore possible to acquire background blurring results such as for a single lens reflex camera even for image data where the depth of field is broad by carrying out the above processing at the image capturing device 100.

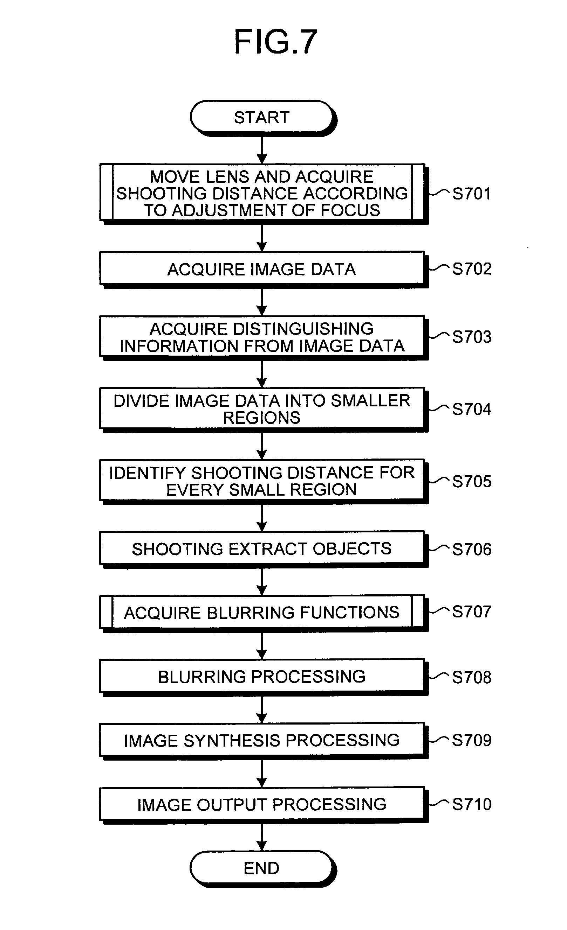

An explanation is now given of blurring processing carried out on image data at the image capturing device 100 up to the point of output. Fig. 7 is a flowchart showing a procedure for the processing explained above at the image capturing device 100.

The distance information acquiring unit 108 acquires a shooting distance for every block that is a photographing target based on focal adjustment made by the lens focal point adjusting unit 111 by moving the lens (Step S701).

Next, the image acquiring unit 101 acquires image data photographed by the image capturing device 100 (Step S702).

The distinguishing information acquiring unit 113 then acquires distinguishing information (edges and/or colors) from the image data (Step S703).

The image region dividing unit 102 divides the image data into smaller regions (Step S704).

Next, the region distance specifying unit 112 identifies a shooting distance for every small region from the shooting distance for every block acquired by the distance information acquiring unit 108 (Step S705).

The object extraction unit 103 then extracts objects by combining small regions for which the shooting distances are close (Step S706).

Next, the blurring function acquiring unit 109 acquires blurring functions based on the shooting distance difference and the camera parameters (the focal length, the F-value, and the aperture shape) every difference in shooting distance acquired by the distance information acquiring unit 108 (Step S707).

The image blurring processing unit 104 then carries out blurring processing on the extracted objects and background using the acquired blurring function (Step S708).

Next, the image synthesis unit 105 synthesizes the objects and background and generates image data (Step S709). The image data is also subjected to appropriate blurring processing according to the distance.

The image output unit 106 outputs the generated image data to a display unit and to other apparatus connected to the image capturing device 100 (Step S710). The user is therefore able to see and utilize the image data.

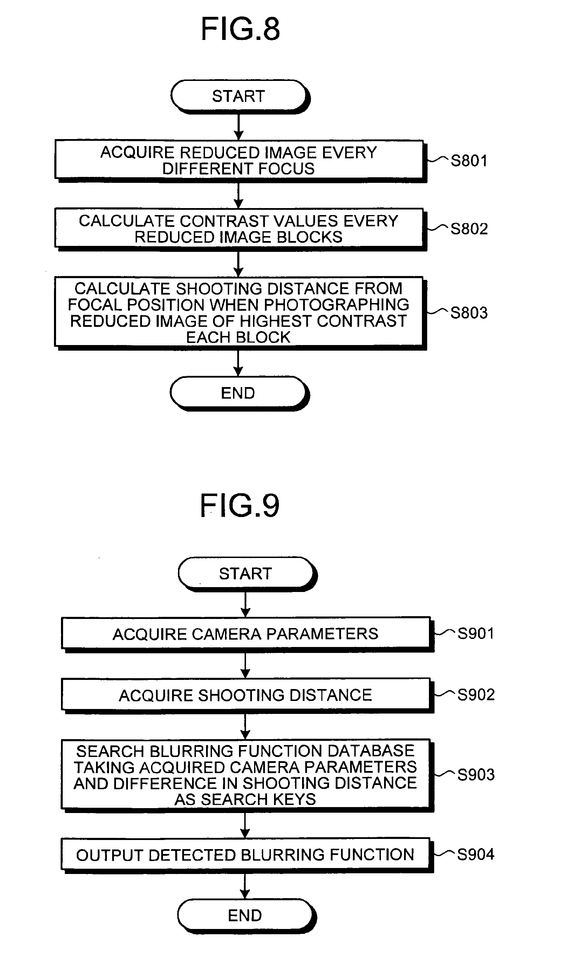

Next, an explanation is given of the processing of acquiring the shooting distances at Step S701 of Fig. 7. Fig. 8 is a detailed flowchart of the processing of acquiring the shooting distances at Step S701.

First, the reduced image acquiring unit 151 acquires reduced images every different focus (Step S801).

Next, the edge information calculating unit 152 calculates contrast values for the respective plurality of acquired reduced images every block of a prescribed size (Step S802).

The distance information calculating unit 153 then calculates a shooting distance each block from the focal position of the reduced image specified as having the highest contrast value each block (Step S803). The block of the highest contrast value for each block is the block for which the focal point is in focus.

Next, an explanation is given of the processing of acquiring the blurring functions at Step S707. Fig. 9 is a detailed flowchart of the processing of acquiring the blurring functions at Step S707.

First, the blurring function acquiring unit 109 acquires the focal length, the F-value, and the shape of the aperture from the camera parameter input unit 107 as camera parameters (Step 901).

Next, the blurring function acquiring unit 109 acquires the shooting distance (and difference in shooting distance to main subject) from the distance information acquiring unit 108 (Step S902). A plurality of the acquired shooting distances (and differences in shooting distances with the main subject) can also be acquired.

The blurring function acquiring unit 109 then searches the blurring function DB 110 taking the focal length, the F-value, the shape of the aperture, and the difference in the shooting distance as search keys (Step S903). Searching is carried out a plurality of times if the shooting distances are plural.

Next, the blurring function acquiring unit 109 outputs the retrieves blurring function to the image blurring processing unit 104 (Step S904). It is then possible to carry out blurring processing using a blurring function corresponding to the shooting distance.

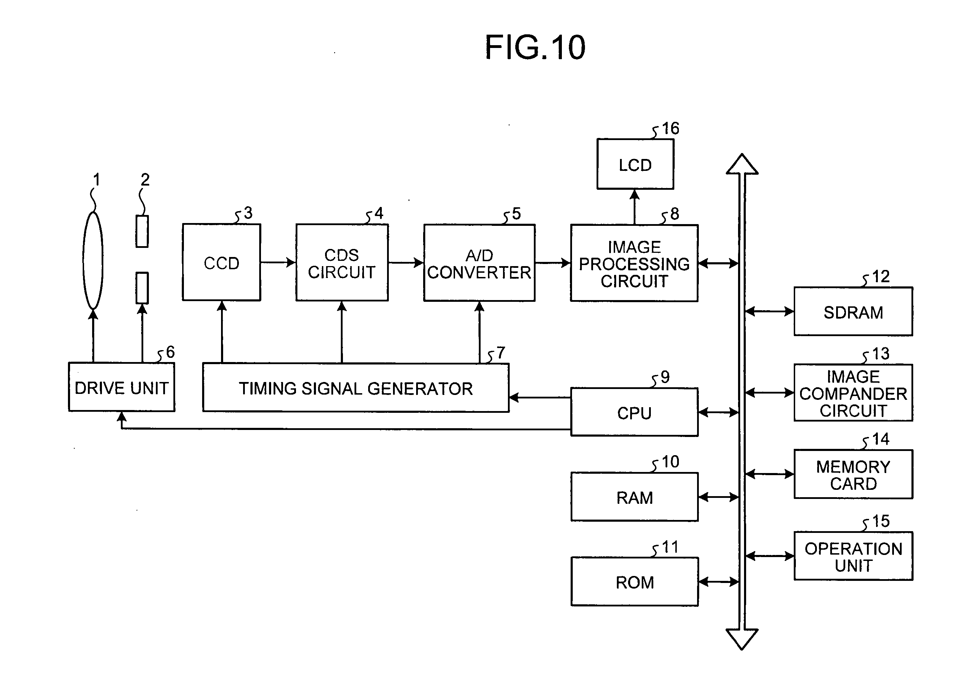

Next, hardware for a digital camera exemplifying an image capturing device implementing the image processing explained above is explained. Fig. 10 is a block diagram showing hardware for a digital camera of this embodiment. Light for a subject shown in Fig. 10 is incident to a CCD (Charge Coupled Device) after first passing through an image capturing optical system 1. A mechanical shutter 2 is disposed between the image capturing optical system 1 and a CCD 3. It is then possible to block light incident to the CCD 3 using this mechanical shutter 2. The image capturing optical system 1 and the mechanical shutter 2 are driven by a drive unit 6.

The CCD 3 converts the optical image formed at an image-sensing surface to an electrical signal for output as analog image data. A noise component of image information outputted by the CCD 3 is removed by a CDS (Correlated Double Sampling) circuit 4. The image information is then outputted to an image processing circuit 8 after being converted to a digital value by an A/D converter 5.

The image processing circuit 8 carries out various image processing such as Y CrCb conversion processing, white balance control processing, contrast correction processing, edge enhancement processing, and color conversion processing, using an SDRAM (Synchronous DRAM) 12 to temporarily store image data. The white balance processing adjusts color density of the image information. The contrast correction processing is image processing for adjusting the contrast of the image information. The edge enhancement processing adjusts sharpness of the image information. The color conversion processing is image processing for adjusting the coloration of the image information. The image processing circuit 8 displays the image information subjected to signal processing and image processing at a liquid crystal display 16 (LCD).

The image information subjected to signal processing and image processing is recorded in a memory card 14 via an image compander circuit 13. The image compander circuit 13 is a circuit that compresses image information outputted by the image processing circuit 8 for output to the memory card 14 according to an instruction acquired from an operation unit 15. The image compander circuit 13 then expands image information read out from the memory card 14 for output to the image processing circuit 8.

Further, timing of the CCD 3, the CDS circuit 4 and the A/D converter 5 is controlled by a CPU (Central Processing Unit) 9 via a timing signal generator 7 that generates timing signals. The image processing circuit 8, the image compander circuit 13, and the memory card 14 are also controlled by the CPU 9.

At the image capturing device 100, the CPU 9 carries out various operation processing in accordance with programs. A ROM (Read Only Memory) 11 that is a read-dedicated memory storing programs etc. and a RAM (Random Access Memory) 10 that is a memory for freely reading and writing having a work area utilized in various processing and an area for storing various data are built into the CPU 9. The CPU 9, the ROM 11 and the RAM 10 are connected to each other by a bus line.

The image capturing device 100 first measures distance information for the subject. The lens focal point adjusting unit 111 changes the focal position while moving the drive unit 6 of the lens and the reduced image acquiring unit 151 acquires a plurality of reduced images. Namely, a plurality of reduced images of different shooting distances is stored in the SDRAM 12. Photographing is then carried out, and the image acquiring unit 101 acquires large size image data for use in background blurring processing. The SDRAM 12 can be used as a work region for the image processing.

Next, the distance information acquiring unit 108 is called, each image is divided into blocks and a total for contrast values for the same position within a block is calculated. Blocks where the contrast is high are determined to be in focus at this position and are taken as an image-forming position for a frame. An object including the block is a main subject. A subject distance is then calculated from the distance information acquiring unit 108. Shooting distances corresponding to all of the blocks are then measured. Processing thereafter is as explained above and is therefore not explained further.

The image processing program executed by the image capturing device 100 in this embodiment has a modular configuration including a face detection function. The actual hardware is such that the CPU 9 reads out and executes and image processing program from the ROM 11 so that each unit is loaded into the RAM 10. The distance measurement, region separation, object extraction, blurring processing, image synthesis, compression processing of the images, and processing outputting the images to the memory cards is then carried out. A person's face is focused on when the face detection function is utilized.

Various apparatus are applicable as the image capturing device 100 such as a digital still camera or a camera that photographs moving images, etc.

According to the image capturing device 100, it is possible to appropriately extract a subject as objects divided up every processing target. It is therefore possible to easily perform image processing on a subject included in the image data.

According to the image capturing device 100, it is possible to acquire image data effectively blurred such as for a port rate photographed with a single lens reflex camera by carrying out blurring processing on the background other than for the extracted object. It is also possible to acquire effectively blurred image data by carrying out blurring processing according to the distance of an object.

### Modified Example

The present invention is not limited to the above embodiments. Various modifications are possible as cited in examples below.

An explanation is now given of a procedure for synthesizing images different to the first embodiment. In this modified example, the image blurring processing unit 104 specifically subjects image data to processing by a filter f_1 and stores image data B. The image blurring processing unit 104 then carries out filtering processing using a filter f_2 on the original image data and stores image data C.

The image synthesis unit 105 cuts out a region for the object 501 from the original image data, cuts out the object 502 from the image data B, cuts out a background portion from the image data C, and synthesizes an image. Blurring and synthesis processing can also be carried out using various other methods.

The processing explained above is not limited to being executed by an image capturing device such as the image capturing device 100. As a second embodiment, an explanation is given of when an image processing device performs processing on the image data photographed by the digital still camera.

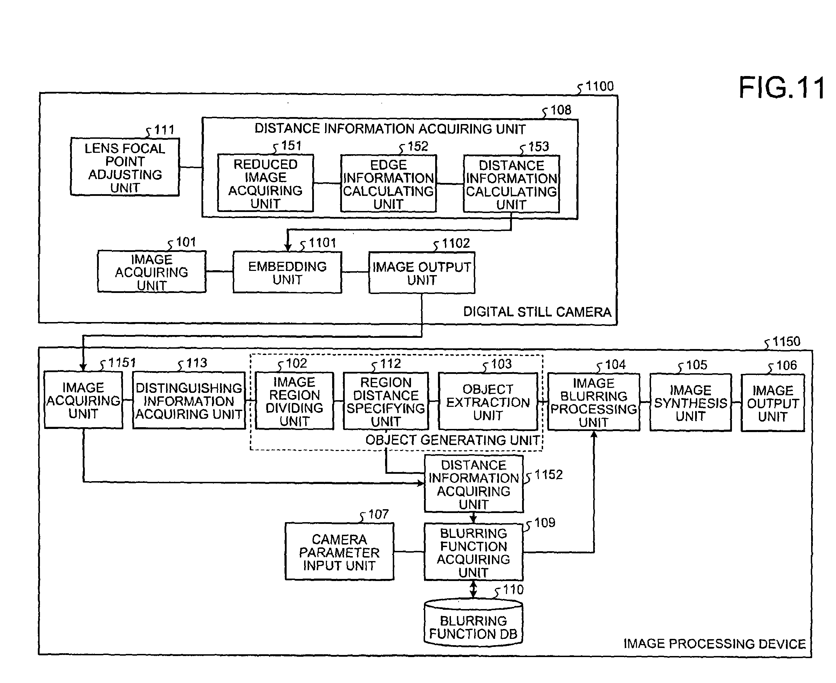

Fig. 11 is a block diagram of a digital still camera 1100 and an image processing device 1150 according to the second embodiment. In the following explanation, elements of the configuration that are the same as for the first embodiment are given the same numerals and are not explained.

The digital still camera 1100 includes the lens focal point adjusting unit 111, the distance information acquiring unit 108, the image acquiring unit 101, an embedding unit 1101, and an image output unit 1102.

The embedding unit 1101 embeds shooting distances for each block acquired by the distance information acquiring unit 108 with regards to image data acquired by the image acquiring unit 101. The location of the embedding is not particularly restricted but embedding an Exif region can be considered.

The image output unit 1102 outputs image data embedded with the shooting distance every block to the image processing device 1150. Blurring processing can then be carried out on the image data by the image processing device 1150.

The image processing device 1150 includes an image acquiring unit 1151, the image region dividing unit 102, the region distance specifying unit 112, the object extraction unit 103, the image blurring processing unit 104, the image synthesis unit 105, the image output unit 106, a distance information acquiring unit 1152, the camera parameter input unit 107, the blurring function acquiring unit 109, and the blurring function DB 110.

The image acquiring unit 1151 then acquires image data embedded with the shooting distance every block is then acquired from the digital still camera 1100.

The distance information acquiring unit 1152 acquires the shooting distance from the image data each block. The acquired shooting distances are then outputted to the region distance specifying unit 112 and the blurring function acquiring unit 109.

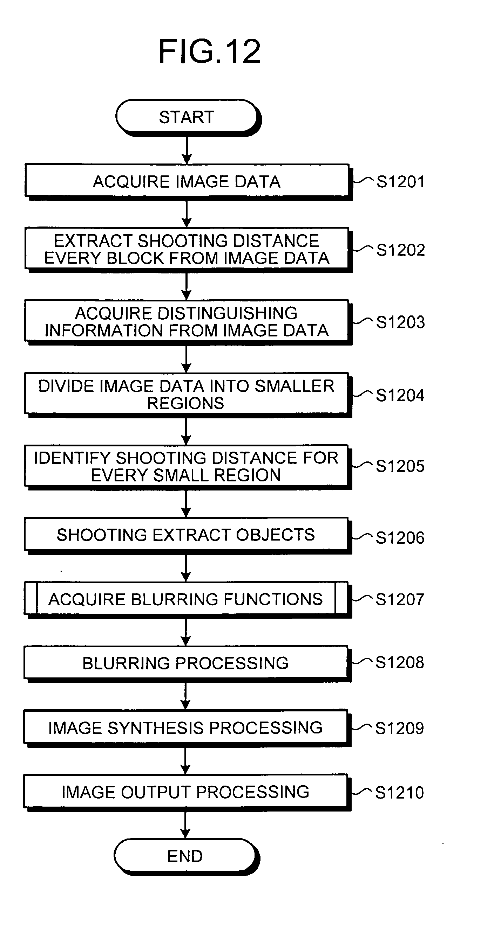

An explanation is now given of blurring processing carried out on image data at the image processing device 1150 up to the point of output. Fig. 12 is a flowchart showing a procedure for the processing explained above at the image processing device 1150.

First, the image acquiring unit 1151 acquires image data embedded with the shooting distance every block from the digital still camera 1100 (Step S1201).

Next, the distance information acquiring unit 1152 acquires a shooting distance every block that is a photographing target from the image data (Step S1202).

After this, processing is carried out until output of the image in the same way as for Steps S703 to S710 shown in Fig. 7 (Steps S1203 to S1210).

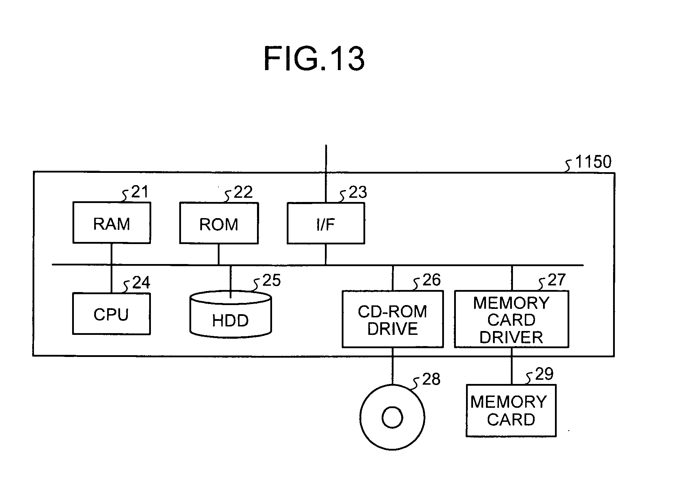

Fig. 13 is a block diagram showing hardware for the image processing device 1150. The image processing device 1150 is a microcomputer including a CPU (Central Processing Unit) 24 that centrally controls each unit. A ROM (Read Only Memory) 22 that is read-dedicated member storing a BIOS etc. and a RAM (Random Access Memory) 21 that stores various data in a rewritable manner and functions as a work area for the CPU are connected to the CPU 24 by a bus. An HDD 25 storing a control program, a CD-ROM drive 26 capable of reading a CD (Compact Disc) - ROM, and an I/F 23 that is an interface presiding over communication with a printer unit etc. are connected to this bus.

A CD-ROM 28 shown in Fig. 13 stores therein a prescribed control program. The CPU 24 reads out the control program stored in the CD-ROM 28 using the CD-ROM drive 26 and installs the control program at the HDD 25. It is therefore possible to carry out the various processing explained above. Further, image information etc. is stored in a memory card 29 and is read out by a memory card driver 27.

The recording medium is not limited to a CD-ROM or a memory card. Media using various methods such as various optical discs such as DVD's etc., various magnetic discs such as magneto-optical discs and flexible discs (FD), and semiconductor memory etc. can also be used. It is also possible to download a program from a network such as the Internet and install the program on the HDD 25. In this case, a storage device storing a program on a server on the transmission side is also a storage medium of the present invention. The program can run on a prescribed OS (operating system). In this case, it can be assumed that execution of part of each of the various processes will be taken on by the OS. The program can also be included as some files for a group of program files constituting prescribed application software such as word processing software or an OS etc.

It is also possible for the image processing program executed by the image processing device 1150 to be stored on a computer connected to a network such as the Internet and be supplied as a result of being downloaded via the network. The image processing program executed by the image processing device of this embodiment can also be supplied or distributed via a network such as the Internet.

It is also possible to supply the image processing program of this embodiment pre-embedded in a ROM etc. The image processing program used by the image capturing device 100 of the first embodiment can also be similarly supplied incorporated in a ROM, or can be supplied stored in various recording media.

The image processing program executed by the image processing device or image capturing device of the above embodiment can also be supplied recorded on a computer-readable recording medium such as on a CD-ROM, flexible disc (FD), CD-R, or DVD (Digital Versatile Disk) in an installable or executable format.

According to the current application, it is possible to make processing of image information straightforward by appropriately extracting object regions for where a subject has been divided each processing target.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image processing device comprising:
an image acquiring unit (101) that acquires image information captured for a subject;
a distance information acquiring unit (108) that acquires a distance from the subject included within each region to a capturing position for the image information for each of a plurality of regions constituting the image information;
a distinguishing information acquiring unit (113) that acquires distinguishing information for distinguishing the subject from the image information; and
a generating unit (102, 112, 103) that generates object regions the subject within the image information is divided up into each processing target from the image information based on the distance and the distinguishing information.

2. The image processing device according to claim 1,
wherein the generating unit (102, 112, 103) includes:
a dividing unit (102) that divides the image information every partial region based on the distinguishing information;
a distance specifying unit (112) that specifies the distance acquired from the region including the partial regions as a distance from the subject including the partial regions to the capturing position every divided partial region; and
an extracting unit (103) that combines the partial regions based on the specified distances and extracts the object regions.

3. The image processing device according to claim 2,
wherein the distance specifying unit (112) specifies the distance acquired from the region where the partial regions occupy the most space when a plurality of regions is included in the divided partial regions.

4. The image processing device according to any one of claims 1 to 3, further comprising:
a blurring processing unit (104) that carries out blurring processing on a background region of the image information other than an object region generated by the generating unit (102, 112, 103);
a synthesis unit (105) that synthesizes the object region and the background region subjected to blurring processing and generates blurring-processed image information.

5. The image processing device according to claim 4,
wherein the blurring processing unit (104) carries out blurring processing on the object region according to the acquired distance when a plurality of the object regions of different shooting distances is extracted.

6. The image processing device according to claim 4 or 5, further comprising a setting information acquiring unit (107) that acquires setting information indicating settings of a camera assumed as a reference in blurring processing,
wherein the blurring processing unit (104) carries out blurring processing using a blurring amount corresponding to the acquired setting information.

7. The image processing device according to any one of claims 4 to 6, further comprising:
a blurring function storage unit (110) that stores therein setting information indicating settings of a camera and blurring functions in a correlated manner; and
a blurring function acquiring unit (109) that acquires the blurring functions correlated in image capture information acquired by the image acquiring unit,
wherein the blurring processing unit (104) carries out blurring processing on the background or the objects using the blurring functions.

8. An image processing method comprising:
first acquiring including acquiring image information captured for a subject;
second acquiring including acquiring a distance from the subject included within each region to a capturing position for the image information for each of a plurality of regions constituting the image information;
third acquiring including acquiring distinguishing information for distinguishing the subject from the image information; and
generating object regions the subject within the image information is divided up into each processing target from the image information based on the distance and the distinguishing information.

9. The image processing method according to claim 8,
wherein the generating includes:
dividing the image information every partial region based on the distinguishing information;
specifying the distance acquired from the region including the partial regions as a distance from the subject including the partial regions to the capturing position every divided partial region; and
combining the partial regions based on the specified distances and extracting the object regions.

10. The image processing method according to claim 9,
wherein the specifying includes specifying the distance acquired from the region where the partial regions occupy the most space when a plurality of regions is included in the divided partial regions.

11. The image processing method according to any one of claims 8 to 10, further comprising:
carrying out blurring processing on a background region of the image information other than an object region generated at the generating;
synthesizing the object region and the background region subjected to blurring processing thereby generating blurring-processed image information.

12. The image processing method according to claim 11,
wherein the carrying includes carrying out blurring processing on the object region according to the acquired distance when a plurality of the object regions of different shooting distances is extracted.

13. The image processing method according to claim 11 or 12, further comprising fourth acquiring including acquiring setting information indicating settings of a camera assumed as a reference in blurring processing,
wherein the carrying includes carrying out blurring processing using a blurring amount corresponding to the setting information acquired at the fourth acquiring.

14. The image processing method according to any one of claims 11 to 13, further comprising:
storing setting information indicating settings of a camera and blurring functions in a correlated manner in a blurring function storage unit; and
fifth acquiring including acquiring the blurring functions correlated in image capture information acquired at the first acquiring,
wherein the carrying includes carrying out blurring processing on the background or the objects using the blurring functions.

15. A computer program product including a computer program stored on a computer-readable recording medium which when executed on a computer causes the computer to execute:
first acquiring including acquiring image information captured for a subject;
second acquiring including acquiring a distance from the subject included within each region to a capturing position for the image information for each of a plurality of regions constituting the image information;
third acquiring including acquiring distinguishing information for distinguishing the subject from the image information; and
generating object regions the subject within the image information is divided up into each processing target from the image information based on the distance and the distinguishing information.
